# EUROPÄISCHE PATENTANMELDUNG

(11) **EP 3 290 355 A1**
(43) Veröffentlichungstag der Anmeldung: **07.03.2018**
(21) Anmeldenummer: 17185684.2
(22) Anmeldetag: 10.08.2017
(51) Int. Cl.: B65D 75/32, B65D 6/00, B65D 85/60, B65D 65/46

(54) **LEBENSMITTELVERPACKUNG MIT ZUMINDEST EINER TEILSCHALE AUS EINEM BIOABBAUBAREN KUNSTSTOFFMATERIALABSCHNITT**

(30) Priorität: 31.08.2016 DE 102016216444; 10.03.2017 DE 202017101402 U
(71) Anmelder: Chocal Aluminiumverpackungen GmbH, 73525 Schwaebisch Gmuend (DE)
(72) Erfinder: VON NIESSEN, Alexander, 73527 Schwäbisch Gmünd (DE); SCHERR, Joachim, 71549 Auenwald (DE); SPECK, Thomas, 73571 Göggingen (DE); WILKSEN, André, 70192 Stuttgart (DE)
(74) Vertreter: Grünecker Patent- und Rechtsanwälte PartG mbB

(57) **Zusammenfassung**

Die vorliegende Erfindung betrifft eine Lebensmittelverpackung mit zumindest zwei Teilschalen (13, 13', 113, 113', 413, 413'), welche über einander gegenüberliegende und zumindest abschnittsweise aneinander anliegende Flansche (14, 14', 114, 114', 414, 414') miteinander verbunden sind und ein Lebensmittelprodukt (100) einhausen, wobei die Teilschalen (13, 13', 113, 113', 413, 413') im Wesentlichen konturabbildend an dem Lebensmittelprodukt (100) anliegen. Zur Bereitstellung einer umweltfreundlichen Verpackung ist zumindest eine der zumindest zwei Teilschalen (13, 13', 113, 113', 413, 413') aus einem bioabbaubaren Kunststoffmaterialabschnitt ausgebildet.

## Beschreibung

Die vorliegende Erfindung bezieht sich auf eine Lebensmittelverpackung bzw. ein verpacktes Lebensmittelprodukt, welches in der erfindungsgemäßen Lebensmittelverpackung aufgenommen ist. Eine gattungsgemäße Lebensmittelverpackung mit den oberbegrifflichen Merkmalen von Anspruch 1 ist beispielsweise aus der EP 2 765 081 A1 bekannt.

Die EP 2 765 081 A1 beschreibt ein Verfahren, bei dem eine Schokoladenhohlfigur mittels einer Verpackung aus zwei Halbschalen verpackt wird. Das in diesem Dokument beschriebene Verfahren ist das Verfahren, mit dem heute die bekannten Überraschungseier eingepackt werden. Bei dem in der EP 2 765 081 A1 beschriebenen Verfahren wird ein Schokoladenhohlkörper in einem ersten Schritt in eine Vertiefung einer Halbschale eingelegt, welche einen die Vertiefung begrenzenden Flansch aufweist. Nachdem der Schokoladenhohlkörper in die Vertiefung der ersten Halbschale eingelegt worden ist, wird eine gleichartige zweite Halbschale mit einem umlaufenden Flansch über den eingelegten Schokohohlkörper gelegt, so dass die Flansche der jeweiligen Halbschale flächig aneinander anliegen und einen umlaufenden und abragenden Randabschnitt nach Art eines saturnartigen Ringes bilden. Um den Hohlraum, der von den beiden Vertiefungen der Halbschalen gebildet wird, dichtend zu verschließen, wird umlaufend an dem abstehenden Randabschnitt, zwischen den einander gegenüberliegenden Flanschen mit einem Heißstempel eine Siegellinie generiert. Danach wird der abstehende umlaufende Rand beschnitten und mittels einem so genannten Bördeln auf sich zurückgefaltet, so dass ein proximaler Randabschnitt über eine Faltlinie von einem distalen Randabschnitt beabstandet ist.

Der Schokoladenhohlkörper liegt in der in EP 2 765 081 A1 beschriebenen Verpackung vollflächig an den Innenwänden der entsprechenden Halbschalen, bzw. an den Innenwänden des von den Halbschalen gebildeten Hohlraumes an, und die Halbschalen bilden das Schokoei konturgenau ab.

Dasselbe Verfahren, wie es in der EP 2 765 081 A1 beschrieben ist, kann auch zur Herstellung von verpackten Nikoläusen, Osterhasen oder jeglichen anderen verpackten Lebensmittelprodukten verwendet werden.

Eine Verpackung aus zwei Halbschalen, in der das Lebensmittel konturgenau eingelegt ist, ist in der DE 10 2011 002 754 A1 beschrieben. Die beiden Halbschalen sind hierbei aus Aluminiumfolie, die innenseitig mit einem thermoplastischen Kunststoff beschichtet ist, hergestellt. Bei Erhitzen der aufeinanderliegenden und aneinander anliegenden Flansche wird eine vollflächige Versiegelung in dem abstehenden Randbereich erreicht.

Bei den im Stand der Technik bekannten Lebensmittelverpackungen wird im Allgemeinen ein Metallfolienmaterial, wie z. B. eine Aluminiumfolie verwendet. Diese Aluminiumfolie wird in einer Umformeinrichtung zwischen einem Formstempel und einer Formkavität zu einer entsprechenden Teilschale umgeformt. Die so erhaltenen Teilschalen werden nach Einlegen des Lebensmittelproduktes an einander gegenüberliegenden Flanschen miteinander verbunden.

Die Verwendung von Metallfolienmaterialien ist aus Umweltgesichtspunkten nicht immer wünschenswert, da die verwendete Folie beispielsweise mit einem hohen Energieaufwand hergestellt bzw. recycelt werden muss.

Wenn die einander gegenüberliegenden Flansche der Teilschalen zur Herstellung der Verpackung heißgesiegelt werden, muss oftmals eine Kühlglocke, wie sie beispielsweise in der DE 1 211 913 beschrieben ist, zum Kühlen des Lebensmittelproduktes verwendet werden, da das Metallmaterial eine gute Wärmeleitfähigkeit aufweist und die in die Flansche eingetragene Wärme die Oberfläche des Lebensmittelproduktes anschmelzen kann.

Ausgehend von dem zuvor beschriebenen Problem schlägt die vorliegende Erfindung eine Lebensmittelverpackung nach Anspruch 1 vor.

Diese zeichnet sich insbesondere dadurch aus, dass zumindest eine der mindestens zwei Teilschalen aus einem Kunststoffmaterialabschnitt, der einen bioabbaubaren Kunststoff enthält bzw. aus diesem aufgebaut ist, geformt ist. Die Erfinder der vorliegenden Erfindung haben erstmalig zumindest eine Teilschale für eine Lebensmittelverpackung bereitstellen können, die aus einem bioabbaubaren Kunststoff geformt ist und die Außenkontur des in der Verpackung aufgenommenen Lebensmittels abbildet. Eine solche konturabbildende Anlage kann eine im Wesentlichen vollflächige Anlage sein. Die Teilschale liegt nach deren Umformung zur jeweiligen Teilschale konturanliegend an dem Lebensmittel an.

Bis hierhin wurden Verpackungen aus Kunststoffmaterialien zur Aufbewahrung von Lebensmitteln allenfalls im Bereich von Fertiggerichten verwendet. Hierbei liegt das Fertiggericht lose in einer mittels Umformung erhaltenen Kunststoffschale, die oberflächlich von einem flachen Deckel verschlossen ist. Bei solchen Kunststoffen handelt es sich um nicht bioabbaubare thermoplastische Kunststoffe wie z.B. Polyactide (PLA), Polycarbonat (APEC), Polypropylen (PP), Polystyrol (PS).

Ein Wandungsabschnitt der Vertiefung der Teilschale, welcher über eine Knicklinie benachbart zu dem Flansch ist, kann z.B. ungefähr senkrecht zu dem Flansch sein. Bei einer konventionellen Kunststoffschale ist die Biegung gering, so dass deren Wandung im Randbereich schräg steht. Den Erfindern der vorliegenden Erfindung ist es erstmalig gelungen, eine Lebensmittelverpackung, die zumindest eine Teilschale aus einem bioabbaubaren Kunststoffmaterialabschnitt enthält, herzustellen, der nach Herstellung durch Umformen so formstabil ist, dass eben eine konturabbildende bzw. vollflächige Anlage an dem Lebensmittelprodukt möglich ist.

Die Rückgewinnungsrate von solchen konventionellen Kunststoffmaterialien ist oft unzureichend. Um diesem Problem zu begegnen, werden neue kompostierbare Werkstoffe mit ähnlichen Barriereeigenschaften eingesetzt werden. Beispiele solcher bioabbaubaren Kunststoffmaterialien, die Rohstoffe aus denen sie hergestellt sind, und deren Grundstoff sind im Folgenden wiedergegeben:
Material: Polyhydroxyalkanoat, wie z.B. Polyhydroxybutylat (PHB), Polyhydroxyvinylat (PHV);
Rohstoff: Stärke, Zucker; Grundstoff: Stärke, Zucker.
Material: Polylactid (PLA); Rohstoff: Maisstärke; Grundstoff: Milchsäure.
Material: thermoplastische Stärke bzw. Stärkeblends; Rohstoff: Kartoffel,
Weizen, Mais; Grundstoff: Stärke.
Material: Zellglas; Rohstoff: Holz; Grundstoff: Cellulose.
Material: abbaubare Polyester.

Materialien werden als biologisch abbaubar bezeichnet, wenn sie durch Mikroorganismen, bzw. Enzyme z. B. im Boden abgebaut werden. Der Abbau erfolgt im Wesentlichen durch Oxidations- und Hydrolyseprozesse zu den Spaltprodukten Wasser, Kohlendioxid und Biomasse.

Neben verschiedenen Kunststoffen aus nachwachsenden Rohstoffen (Biokunststoffe) fallen unter die vorgenannte Definition auch erdölbasierte Materialien wie Polyvinylalkohole, Polycaprolactone oder bestimmte Copolyester (z.B. PBAT: Ecoflex von BASF oder Ecoworld von JinHui Zhaolong). Allerdings sind nicht alle auf nachwachsenden Rohstoffen basierenden Biokunststoffe zwangsläufig biologisch abbaubar (z.B. vulkanisierter Kautschuk).

Der Begriff "biologisch abbaubar" ist abzugrenzen von in der Verpackungsindustrie manchmal genutzten Polyolefinfolien (v.a. PE), die als "oxo-bioiogisch abbaubar" oder "oxoabbaubar" deklariert sind. "Oxo-abbaubare" Additive sind meist Metallionen (Kobalt, Mangan, Eisen, Zink), welche die Oxidation und den Kettenabbau in Kunststoffen, besonders unter Wärme, Luft und Sauerstoff, beschleunigen. Ergebnisse dieses Kettenabbaus sind sehr kleine, kaum sichtbare Kettenfragmente, welche sich nicht biologisch abbauen (keiner der Additivhersteller hat bislang Daten bereitstellen können), allerdings durch unsere Nahrungskette wandern.

Im engeren Sinne (v.a. im Bereich der Biomedizin) als bioabbaubar werden Materialien bezeichnet, die im Körper durch Macrophagen, Enzyme oder Hydrolyse innerhalb von Tagen bis wenigen Jahren abgebaut werden. Hierunter fallen v.a. biogene Polymere wie Kollagen, Fibrin oder Hyaluronsäure, aber auch Polymilchsäure (Polylactid), Polyglycolid und Polycaprolacton.

Alle zuvor genannten Materialien, die im weitesten Sinne als biologisch abbaubar bezeichnet werden, können Verwendung finden. Insbesondere ist es vorteilhaft, dass diese biologisch abbaubaren Materialien auch Biomaterialien aus nachwachsenden Rohstoffen sind.

Wenn die Lebensmittelverpackung jedoch konturabbildend bzw. vollflächig an dem von dieser eingehausten Lebensmittelprodukt anliegt, muss eine im Vergleich zu den konventionellen Kunststoffschalen, in denen das Lebensmittel lose aufgenommen ist, sehr starke Biegung des Kunststoffmaterials erreicht werden. Die Erfinder der vorliegenden Erfindung haben erstmalig eine Verpackung aus einem bioabbaubaren Kunststoffmaterial, welches an sich oft spröde ist, hergestellt, die eine solche starke Biegung aufweist und nicht bricht bzw. keine Risse aufweist, so dass das verpackte Lebensmittelprodukte nicht von Umgebungsluft durch diese Risse kontaktiert wird.

Eine konturabbildende Anlage kann eine vollflächige Anlage sein, welche die Kontur des Lebensmittels abbildet. Eine solche Anlage schließt jedoch eng begrenzte Abschnitte, in denen die Verpackungsschale einen kleinen Abstand von der Lebensmitteloberfläche aufweist, nicht aus. Ein solcher Abstand zwischen Verpackungsinnenwand und Lebensmitteloberfläche kann z.B. in Bereichen vorliegen, in welchen verschiedene Geometrien des Lebensmittels aufeinander treffen, zum Beispiel im Gesicht eines als Figur ausgestalteten Lebensmittels im Bereich wo Augen und Nase aufeinander treffen und/oder im Bereich des Übergangs zwischen Hand und Arm. Ein solcher Abstand kann auch in Abschnitten der Lebensmitteloberfläche mit kleinem Radien bzw. hoher Biegung auftreten. Die Abstände können bis zu 1 µm, 50 µm, 1 mm, 5 mm, oder sogar bis zu 10 mm betragen. Die zuvor genannten Abstände können für sich jeweils obere als auch untere Grenzen des Abstandsbereiches bilden. Große Abstände von 5 mm oder sogar bis zu 10 mm können z.B. vorgesehen sein, um ein Reißen des Papiers an anderer Stelle zu vermeiden.

Das Lebensmittelprodukt kann jegliches Lebensmittelprodukt sein, insbesondere hat die vorliegende Erfindung eine Süßigkeit, wie beispielsweise eine Backware oder eine Schokoladenfigur, insbesondere Schokoladenhohlfigur, im Sinn.

Die aneinander anliegenden Flansche sind insbesondere derart miteinander verbunden, dass ein fester Zusammenhalt der beiden Teilschalen erreicht wird und der umgeformte Kunststoffmaterialabschnitt von den aneinander befestigten Flanschen über die Lebensmitteloberfläche festgezogen ist.

Gemäß einer vorteilhaften Weiterbildung der Erfindung ist das bioabbaubare Kunststoffmaterial ein thermoformbares Material. Zwar konnten die Erfinder bei der Verfahrensführung auch Bedingungen finden, wobei durch verschiede Verfahrensführungen jegliches bioabbaubare Kunststoffmaterial zu der erfindungsgemäßen Verpackung verformt werden konnte. Besonders vorteilhaft ist jedoch, ein thermoformbares Kunststoffmaterial zu verwenden.

Ein thermoformbares Kunststoffmaterial ist ein Material, das unter Einwirkung von Hitze in einer Umformeinrichtung, z.B. zwischen zwei Formhälften, wie z.B. einem Stempel, der in eine Kavität gedrückt wird, umgeformt werden kann, wie es an sich für Thermoplaste bekannt ist.

Gemäß einer vorteilhaften Weiterbildung der Erfindung kann das bioabbaubare Kunststoffmaterial ein oder mehrere Materialien aus der Gruppe folgender Materialien enthalten: Polyhydroxyalkanoat, Polylactid, thermoplastische Stärke, Zellglas, Polyester.

Für Beispiele solcher bioabbaubaren Kunststoffmaterialien, die Rohstoffe aus denen sie hergestellt sind, und deren Grundstoff, sei auf das zuvor Gesagte verwiesen.

Es reicht aus, wenn die Teilschale zumindest eine Lage eines solchen bioabbaubaren Materials enthält. Diese Lage des bioabbaubaren Materials kann beschichtet sein und/oder auch eine oder mehrere Fensteröffnungen, insbesondere Durchbrechungen, aufweisen.

Da es sich bei der vorliegenden Verpackung um eine Lebensmittelverpackung handelt, ist jedoch darauf zu achten, dass die Materialien, die mit der Lebensmitteloberfläche in Kontakt kommen, nicht schädlich für den Menschen sind und nicht oder unwesentlich von dem Lebensmittel in der Verpackung aufgenommen werden.

Gemäß einer vorteilhaften Weiterbildung der Erfindung kann im Wesentlichen die gesamte Teilschale aus dem bioabbaubaren Kunststoffmaterial gebildet sein. Die Teilschale ist so im Wesentlichen durch den bioabbaubaren Kunststoffmaterialabschnitt selber gebildet. Diese Kunststoffteilschalen können jedoch auch mit weiteren Materialien, welche kein bioabbaubarer Kunststoff sind, beschichtet sein. Trotzdem wird diese mehrlagige Kompositteilschale als bioabbaubare Kunststoffteilschale bezeichnet, soweit zumindest eine Lage aus einem bioabbaubaren Kunstoffmaterial aufgebaut ist. Es können auch einzelne Fenster oder kleine Ausnehmungen in der Teilschale gebildet sein. Auch schließt eine Ausgestaltung der Teilschale aus bioabbaubarem Kunstoffmaterial nicht aus, dass der Kunststoffmaterialabschnitt eine oder mehrere Beschichtungen aufweist oder mehrschichtig aufgebaut ist. Der Kunststoffmaterialabschnitt erstreckt sich somit z.B. bis in die die jeweilige Teilschale begrenzenden Flansche, die integral an der Teilschale vorgesehen sind. Somit können auch die Flansche aus dem Kunststoffmaterialabschnitt gebildet sein, über die die jeweiligen Teilschalen miteinander verbunden sind. Dadurch, dass der Flanschbereich auch aus dem Kunststoffmaterialabschnitt geformt ist, hat dieser eine geringe thermische Leitfähigkeit. So wird das Problem des Wärmeeintrags in das Lebensmittel während des Verbindens der beiden Flansche durch Heißsiegeln reduziert.

Gemäß einer vorteilhaften Weiterbildung können die zumindest zwei Teilschalen aus einem bioabbaubaren Kunststoffmaterialabschnitt geformt sein. Für die vorliegende Erfindung reicht es zwar aus, dass zumindest eine der mindestens zwei Teilschalen aus dem bioabbaubaren Kunststoffmaterialabschnitt geformt ist. Es hat sich jedoch gezeigt, dass sogar eine Lebensmittelverpackung bereit gestellt werden kann, bei der die beiden Teilschalen, die über aneinander anliegende Flansche miteinander verbunden worden sind, aus jeweils einem bioabbaubaren Kunststoffmaterialabschnitt hergestellt sind. Das verwendete Kunststoffmaterial für den jeweiligen bioabbaubaren Kunststoffmaterialabschnitt einer jeden Teilschale kann das gleiche sein, oder auch eine unterschiedliche Zusammensetzung aufweisen. Die Erfinder haben bemerkenswerterweise festgestellt, dass nicht einmal eine zweite Teilschale aus einem anderen Material als Kunststoff, z.B. Metall oder Papier vorgesehen sein muss, damit die erste Teilschale aus dem Kunststoffmaterialabschnitt so über das Lebensmittelprodukt gezogen werden kann, dass diese eng anliegend dort gehalten wird und keine Risse oder Leckagebrüche aufweist.

Gemäß einer vorteilhaften Weiterbildung der Erfindung kann die Lebensmittelverpackung aus lediglich zwei Teilschalen gebildet sein, welche jeweils für sich eine dreidimensional gebogene Ausgestaltung aufweisen, so dass jede Teilschale für sich ein Teil des Hohlraumes, in dem das Lebensmittel aufgenommen ist, bildet. Jede der zwei Teilschalen weist einen zumindest teilweise umlaufenden Flansch auf, der eine Vertiefung begrenzt. Die Vertiefungen der Teilschalen bilden dann den Hohlraum, in dem das Lebensmittel aufgenommen ist.

Gemäß einer vorteilhaften Weiterbildung der Erfindung können auf der Außenoberfläche der Lebensmittelverpackung Nuten und/oder Ausbuchtungen und/oder Einkerbungen ausgebildet sein, die entsprechenden Nuten und/oder Ausbuchtungen und/oder Einkerbungen auf der Lebensmitteloberfläche, an der die entsprechende Teilschale anliegt, entsprechen. Durch maschinelle Umformung, beispielsweise durch Thermoformen, insbesondere in Verbindung mit vorherigem Erwärmen, oder auch nur durch längeres Umformen ohne erhöhte Temperatur, konnte eine Verpackung bereitgestellt werden, wobei das bioabbaubare Kunststoffmaterial bzw. die Teilschale(n) ein Muster auf dessen Oberfläche aufweist/aufweisen. Das Muster entspricht einem Muster auf der Oberfläche des Lebensmittels. Beispielsweise sind Schokoladenfiguren, insbesondere Schokoladenhohlfiguren, auf deren Außenoberfläche mit einem Muster aus Nuten und/oder Ausbuchtungen und/oder Einkerbungen versehen, um eine bestimmte Gestalt darzustellen. Bei einem Nikolaus können z.B. auf dessen Mantel durch entsprechende Nuten Sterne dargestellt werden. Der Übergang vom Mantel zu den Händen und/oder dem Kopf des Nikolauses kann durch eine entsprechende Ausbuchtung oder Einkerbung betont werden. Auch andere Schokohohlfigurenausgestaltungen, wie z.B. Osterhasen, Pfingstfüchse, Eulen, Käfer oder ähnliches, weisen zur optischen Differenzierung solche Einkerbungen, Ausbuchtungen und/oder Nuten auf. Die Teilschalen aus dem bioabbaubaren Kunststoffmaterialabschnitt liegen derart konturabbildend bzw. vollflächig an dem Lebensmittelprodukt an, dass die entsprechenden Elemente auch an der Lebensmittelverpackung sichtbar sind. Erstmalig konnte durch ein Umformen des bioabbaubaren Kunststoffmaterials eine solche filigrane Ausgestaltung der Oberfläche der Verpackung bereitgestellt werden.

Gemäß einer vorteilhaften Weiterbildung der Erfindung können die Teilschale(n) Stauch- und/oder Dehnfalten aufweisen. Solche Stauch- und/oder Dehnfalten kommen z.B. dadurch zustande, wenn das Kunststoffmaterial zwischen zwei Formhälften umgeformt wird, und dieses z.B. von dem Formstempel in die mit diesem zusammenwirkende Formkavität hineingezogen wird. Hierbei fließt das Material und dehnt sich an manchen Stellen aus, um an die Formkavität, die mit dem Formstempel zusammenwirkt, angepasst zu werden. Hierbei wirft das überschüssige Material dann Falten. Diese Falten sind dann insbesondere auf der Außenoberfläche der entsprechenden Teilschalen sichtbar. Diese Stauch- bzw. Dehnfalten treten insbesondere bei starken Biegungsradien des Papiermaterials auf. Deshalb zeigt dieses Merkmal eine besonders starke Biegung bzw. besonders hohe Biegungsradien. Solche hohen Biegungsradien konnten für die vorliegende Erfindung erstmalig hergestellt werden.

Gemäß einer vorteilhaften Weiterbildung der Erfindung kann die Lebensmittelverpackung ein Volumen von zwischen 17,5 cm³ und 27000 cm³ insbesondere zwischen 40 cm³ und 3000 cm³ aufweisen und das Lebensmittelprodukt vollflächig umgeben. Ein Volumen von 40 cm³ entspricht ungefähr dem Volumen eines Tischtennisballs, wobei ein Volumen von 3000 cm³ ungefähr dem Volumen eines Handballs entspricht. Die verpackten Lebensmittel, beispielsweise Schokoladenhohlfiguren, können die zuvor beschriebenen Volumina aufweisen.

Es hat sich gezeigt, dass bis zu einem Volumen von 27000 cm³ oder kleiner noch formstabile Teilschalen aus dem Kunststoffmaterial hergestellt werden können. Teilschalen bis zu einem Volumen von 3000 cm³ oder kleiner sind leicht zu handhaben. Diese weisen bis zu diesem Volumen eine gewisse Formstabilität auf und können trotzdem vollflächig an dem Lebensmittelprodukt anliegen.

Es hat sich gezeigt, dass bis zu einem Volumen von 17,5 cm³ oder größer noch Teilschalen hergestellt werden können, die an dem Lebensmittel anliegen und dass die bei den kleinen Volumina sehr hohe Biegung ohne Reißen des Materials erreicht werden konnte, das die Teilschalen das Lebensmittel vollständig einhaust. Ein Volumen von 40 cm³ ist eine für den Verbraucher gut zu verzehrende Größe.

Die folgenden Zwischenbereiche sind ebenfalls möglich: 100 cm³, 150 cm³, 300 cm³, 550 cm³, 800 cm³, 1100 cm³, 1500 cm³, 2000 cm³, 2050 cm³, 5000 cm³, 11000 cm³, 20000 cm³. Die genannten Bereiche können sowohl obere bzw. untere Grenzen bilden. Bei kleinen Volumina ist ein im Verhältnis hoher Biegungsradius erforderlich, bei großen Volumina ist eine gewisse intrinsische Formstabilität nötig.

Gemäß einer vorteilhaften Weiterbildung der Erfindung kann der Kunststoffmaterialabschnitt eine flächenbezogene Masse von zwischen 10 und 500 g/m², insbesondere zwischen 70 und 350 g/m² aufweisen. Die folgenden Zwischenbereiche sind ebenfalls möglich: 15 g/m², 20 g/m², 30 g/m², 40 g/m², 50 g/m², 80 g/m², 100 g/m², 120 g/m², 180 g/m², 200 g/m², 250 g/m², 300 g/m², 400 g/m². Die genannten Bereiche können sowohl obere bzw. untere Grenzen bilden.

Gemäß einer vorteilhaften Weiterbildung der Erfindung kann der Kunststoffmaterialabschnitt eine Dicke von 10 µm und 1 mm aufweisen. Vorzugsweise sind folgende Stärken vorgesehen: 10 µm, 20 µm, 30 µm, 38 µm, 50 µm, 60 µm, 80 µm, 100 µm, 120 µm, 140 µm, 150 µm, 170 µm, 200 µm, 350µm, 375µm, 500 µm, 800 µm, 1 mm. Die zuvor genannten Stärken können jeweils in allen Kombinationen jeweils untere bzw. obere Grenzen eines bevorzugten Stärkenbereiches bilden.

Gemäß einer vorteilhaften Weiterbildung der Erfindung kann der bioabbaubare Kunststoffmaterialabschnitt eine Beschichtung aufweisen. Die Beschichtung kann sowohl auf der inneren als auch auf der äußeren Oberfläche vorhanden sein. Eine solche Beschichtung kann eine Lackschicht, eine konventionelle Kunststoffschicht aus einem nicht bioabbaubaren Material, oder auch eine Kombination von verschiedenen bioabbaubaren Kunststoffschichten und/oder Lackschichten sein. Jede beliebige Beschichtung ist im Prinzip denkbar.

Es ist jedoch vorteilhaft, dass auch mit der Beschichtung und soweit weitere Materialien an den entsprechenden Teilschalen vorgesehen sind, die gesamte Verpackung bioabbaubar sein sollte, dies schließt auch einen möglichen Verbindungskleber zur Verbindung der Flansche mit ein. Insbesondere sind alle Materialien der Verpackung aus bioabbaubaren, insbesondere aus nachwachsenden Rohstoffen hergestellt.

Die Beschichtung kann auch eine Beschichtung, die durch Laminieren erhalten wird, sein. Diese Beschichtung hat vorzugsweise folgende Stärken: 10 µm, 20 µm, 50 µm, 100 µm, 150 µm, 200 µm, 350µm, 500 µm, 800 µm, 1 mm. Die zuvor genannten Stärken können jeweils in allen Kombinationen jeweils untere bzw. obere Grenzen eines bevorzugten Stärkenbereiches bilden.

Die Teilschalen können auch aus einem bioabbaubaren Kunststoffmaterialabschnitt aus mehreren Lagen von bioabbaubarem Kunststoff aufgebaut sein.

Gemäß einer vorteilhaften Weiterbildung können die Teilschalen mit dem bioabbaubaren Kunststoffmaterialabschnitt derart formstabil ausgebildet sein, dass diese auch ohne Anlage an dem Lebensmittelprodukt noch formstabil sind. Das heißt, nach Umformung der entsprechenden Teilschale, fällt diese nicht wieder in sich zusammen und weist im Wesentlichen dieselben Biegungsradien auf, wie die Oberfläche des Lebensmittelproduktes, an der die Teilschale später anliegt.

Gemäß einer vorteilhaften Weiterbildung kann die Teilschale unter Wärmebehandlung umgeformt sein. Durch die Behandlung mit Wärme kann erreicht werden, dass die durch die Umformung erreichte Geometrie erhalten bleibt, da sich bei Einwirken von Wärme das Kunststoffmaterial an die Form der Umformkavität bzw. des Stempels anpasst und nach dem Abkühlen in der vorgegebenen Form bleiben.

Bevorzugte Wärmebereiche sind folgende: 100°C, 120°C, 150°C, 180°C, 200°C, 280°C, 300°C, 320°C, 340°C. Diese Wärmebereiche können für sich jeweils obere bzw. untere Grenzen bilden.

Gemäß einer vorteilhaften Weiterbildung kann eine Umformdauer unter Wärmebehandlung im Bereich von 0,1µsec bis zu 5 sec vorgesehen ist. Die Umformdauer bestimmt die Vernetzung und Umorientierung des Kunststoffmaterials. Eine längere Umformdauer gibt zwar eine gute Formstabilität. Sie ist jedoch im Lichte der Anzahl der pro Zeiteinheit hergestellten Verpackungen nachteilig. Zudem kann es vorkommen, dass das bioabbaubare Material, welches empfindlicher als konventionelles Kunststoffmaterial ist, degeneriert.

Bei den höheren Temperaturen von 180°C, 200°C, 280°C, 300°C, 320°C, 340°C kann insbesondere eine sehr kurzzeitige Erwärmung stattfinden. Eine kurzzeitige Erwärmung ist eine Erwärmung von einigen ms (Millisekunde) bis zu 1 s (Sekunde) z.B. 1 ms, 0,1 s, 0,5 s, 1 s 2s, 3s, 4s. Diese Zeitspannen können für sich jeweils obere bzw. untere Grenzen bilden. Diese Umformdauern können in Abhängigkeit der gewünschten Teilschalenkonfiguration mit jeder der zuvor genannten Umformtemperaturen kombiniert werden.

Gemäß einer vorteilhaften Weiterbildung der Erfindung kann die Teilschale nach deren Umformung einen Springback von unter 10% aufweisen. Ein Springback ist eine selbstständige Rückstellung der aus den Formhälften entnommenen Teilschalen. Nach der Umformung findet oftmals eine zumindest teilweise Rückverformung statt, so dass die Biegung der umgeformten Teilschale nicht mehr der Biegung, wie sie von den Umformhälften vorgegeben wurden, entspricht. Damit eine vollflächige Anlage der Teilschale an dem Lebensmittel erreicht werden kann, und das Papier eine relativ starke Biegung aufweist, um das Lebensmittel zu umgeben, wird ein möglichst geringer Springback bevorzugt. Bevorzugte Bereiche eines Springbacks sind 9%, 5%, 3%, 2%. Diese Bereiche können für sich jeweils obere bzw. untere Grenzen bilden.

Es hat sich gezeigt, dass in Abhängigkeit der unterschiedlichen Bedingungen in Bezug auf Umformdauer, Umformtemperatur und Dicke des Materials ein geringer Springback von maximal 10% erreicht werden kann.

Gemäß einer vorteilhaften Weiterbildung der Erfindung können zur Verbindung der Teilschalen der Lebensmittelverpackung die einander anliegenden Flansche gebördelt und/oder gesiegelt und/oder angelegt werden.

Bei einer solchen Bördelung werden die aneinander anliegenden Flansche, die so einen abstehenden Randabschnitt bilden, derart umgeformt, dass ein distaler Randbereich auf einen proximalen Randbereich gefaltet wird, wobei dann eine Bördellinie zwischen dem distalen und dem proximalen Randbereich gebildet wird. Die beiden aneinander anliegenden Flanschbereiche werden, vorzugsweise während sie aneinander anliegen, umgeschlagen. Es wird nicht, wie es beispielsweise aus dem Bördeln aus der Automobilindustrie bekannt ist, nur einer der Flansche um die Außenkante des anderen Flansches gebördelt. Neben dem Bördeln kann zusätzlich oder alternativ eine Verbindung mittels Siegeln bereitgestellt werden.

Ein solches Siegeln ist beispielsweise in der Gebrauchsmusteranmeldung mit der Nummer DE 20 2016 102 156.1 beschrieben, deren Offenbarungsgehalt durch diesen Verweis in die vorliegende Anmeldung mit aufgenommen wird.

Für ein solches Siegeln kann auf einen oder beiden Flanschen vollflächig oder abschnittsweise eine Siegelschicht oder ein Kleber vorgesehen sein. Insbesondere ist ein Heißsiegeln vorteilhaft, wobei dann zumindest eine oder beide Teilschalen eine Siegelbeschichtung aufweisen, die unter Hitzeeinwirkung aufschmilzt.

Es hat sich herausgestellt, dass auch wenn nur eine der Teilschalen aus bioabbaubarem Kunststoffmaterial hergestellt ist und die andere Teilschale aus einem anderen Material, welches keine heißsiegelfähige Beschichtung oder einen Kleber aufweist, wie z.B. unbeschichtetes Papier, hergestellt ist, ein Heißsiegeln durchgeführt werden kann, da das bioabbaubare Kunststoffmaterial in dessen Flanschbereich angeschmolzen wird und selbst eine Siegelung bildet. Beim Aufschmelzen haftet das bioabbaubare Kunststoffmaterial z.B. dann an dem Flansch aus einem Papiermaterial.

Ein Anlegen der miteinander verbundenen und einander gegenüberliegenden Flansche an die Außenoberfläche der Verpackung kann alleine oder in Kombination mit dem Bördeln und/oder Siegeln stattfinden.

Weitere vorteilhafte Weiterbildungen der Erfindung werden anhand der nachfolgend erläuterten Ausführungsbeispiele in Verbindung mit der Zeichnung erläutert. In dieser zeigen:
- Figuren 1a bis 1c: eine schematische Abfolge von Verfahrensschritten, welche in einer Vorrichtung zur Herstellung von Teilschalen einer Verpackung durchgeführt werden,
- Figur 2: ein Beispiel einer Teilschale in Querschnittsansicht (links), in Aufsicht (Mitte) sowie eine zusammengesetzte Lebensmittelverpackung (rechts),
- Figur 3: eine Aufsicht auf eine Teilschale einer nikolausförmig ausgebildeten Lebensmittelverpackung,
- Figur 4: eine Querschnittsansicht durch die Lebensmittelverpackung entlang der Linie A-A aus Figur 3,
- Figuren 5a bis 5e: einzelne Schritte eines Verfahrens zum Bördeln eines abstehenden aus einander gegenüberliegenden Flanschen gebildeten Randabschnittes,
- Figur 5f: einen Ausschnitt, der einen Bereich einer aus zwei Teilschalen gebildeten Lebensmittelverpackung zeigt, wobei der aus einander gegenüberliegenden Flanschen gebildete Randabschnitt gebördelt ist,
- Figuren 6a und 6b: verschiedene Ansichten eines umgeformten Papiermaterialabschnitts, aus dem eine Teilschale zur Verpackung einer Schokoladen-Eule hergestellt wird,
- Figuren 7a und 7b: ein verpacktes Schokoladenei aus zwei Teilschalen, die über aneinander anliegende Flansche miteinander verbunden sind, mit einer Teilschale aus einem Papiermaterial und einer Teilschale aus einem bioabbaubarem Kunststoffmaterial.

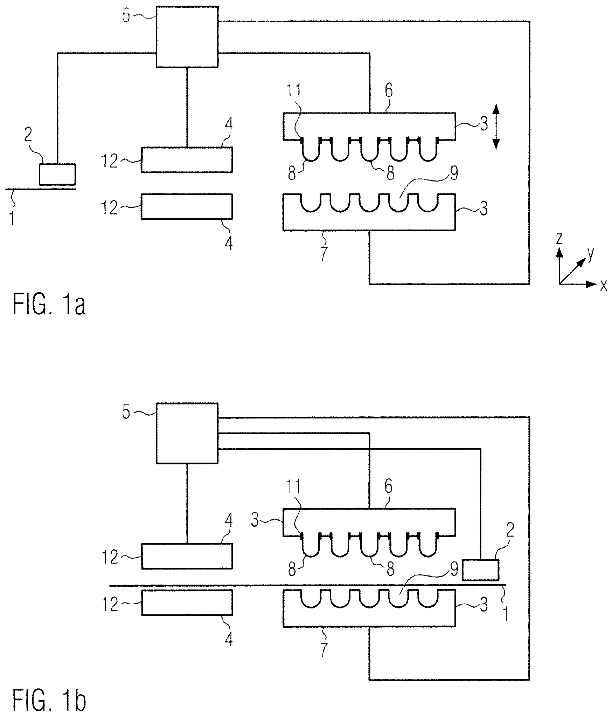

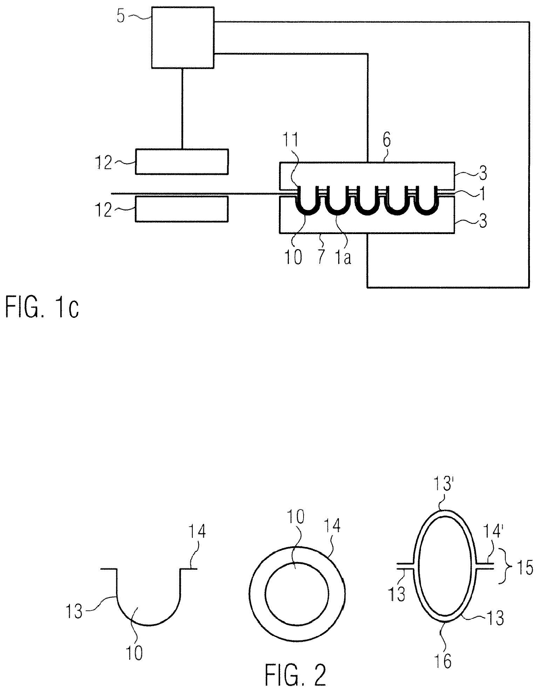

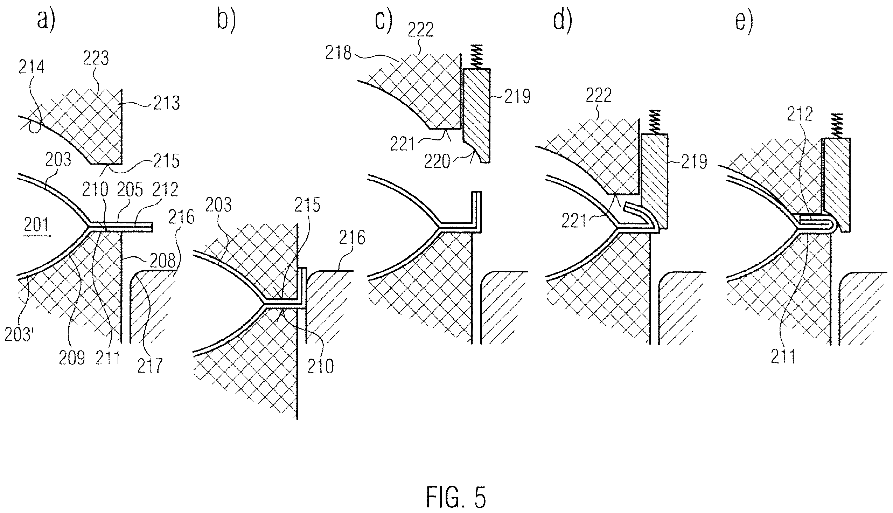

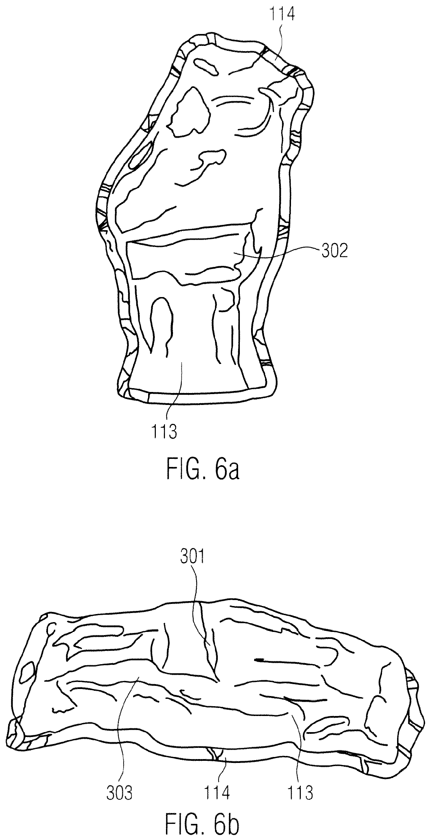

Anhand der Beispiele aus Figuren 6a bis 7b, in denen die neuartige Verpackung bzw. die neuartige Verpackungsteilschale näher vorgestellt wird, wird beispielhaft anhand der Figuren 1 bis 5 die Herstellung von Teilschalen (Fig. 1a bis c), die Herstellung einer Lebensmittelverpackung aus Teilschalen sowie das Bördeln an den überstehenden Randabschnitten (Figur 5a bis e) näher erläutert.

In Figur 1a ist ein Ausschnitt aus einer Linie einer Vorrichtung zur Herstellung einer Lebensmittelverpackung dargestellt. Diese Vorrichtung kann z.B. Teil einer Verpackungslinie sein, in der die entsprechenden Schritte von der Bereitstellung des Verpackungsmaterials bis zum fertig verpackten Lebensmittelprodukt in einzelnen hintereinander geschalteten Stationen durchgeführt werden.

Zur Bereitstellung der Folie kann eine in der deutschen Patentanmeldung Nr. 10 2015 220 735.8 beschriebene Einrichtung bzw. ein beschriebenes Verfahren verwendet werden. Diese Folie kann ein bioabbaubares Kunststoffmaterial von einer Rolle sein. Alternativ zu der Verfahrensführung mit der Folie können auch einzelne Bögen von bioabbaubarem Kunststoffmaterial verwendet werden. Soweit auf den Begriff "Folie" abgestellt wird, soll damit ein von einer Rolle abgewickeltes Startmaterial bezeichnet sein.

Nach Herstellung von Verpackungsteilschalen können diese in der Art wie sie in der EP 2 366 631 A1 und/oder der in Figur 1 der deutschen Patentanmeldung Nr. 10 2015 108 840.1 und der dazugehörigen Beschreibung und/oder der PCT-Anmeldung PCT/EP2016/051971 und/oder der deutschen Patentanmeldung Nr. 10 2015 101 417.3 beschrieben ist miteinander zu einer Verpackung verbunden werden.

Die zuvor genannten Offenbarungen der verschiedenen Anmeldungen werden hiermit durch Bezug in den Offenbarungsgehalt der vorliegenden Anmeldung aufgenommen.
Die Folienbahn 1 ist in Figur 1a auf der linken Seite schematisch dargestellt. Diese wird in dem Beispiel an deren vorderen Ende von einer Zuführeinrichtung 2 angesaugt und durch Translation dieser Zuführeinrichtung 2 in eine Verformungseinrichtung 3 verbracht (vgl. Figur 1b). Die Zuführeinrichtung 2, die Verformungseinrichtung 3 sowie eine schematisch in dem Beispiel dargestellte Heizeinrichtung 4 werden über eine Steuereinrichtung 5 gesteuert. In dem Beispiel weist die Heizeinrichtung 4 zwei einander gegenüberliegende Heizplatten 12 auf. Über diese kann das zugeführte Folienmaterial erwärmt werden. Diese werden z.B. nach Art eines Stempels gegeneinander gedrückt und erwärmen das zwischen sich aufgenommene Folienmaterial, wie z.B. Papier, Metall, Kunststoff. Eine solche Heizeinrichtung ist jedoch nicht notwendig, z.B. wenn sich das Material auch ohne Erhitzung gut verformt. Zusätzlich oder alternativ zu der Heizeinrichtung kann auch eine Befeuchtungseinrichtung vorgesehen sein, die das Material befeuchtet, damit es, wenn es ein Papiermaterial ist, besser umgeformt werden kann. Die Befeuchtungseinrichtung kann eine Sprühstation sein, eine Dampfstation, oder ein Wasserbecken, durch welches das Material untergetaucht geführt wird. Die Verformungseinrichtung 3 weist eine obere Formhälfte 6 und eine untere Formhälfte 7 auf. Die obere Formhälfte 6 weist im vorliegenden Fall eine regelmäßige Anordnung von Formstempeln 8 auf, welche derart positioniert sind, dass diese bei Zusammenfahren der oberen Formhälfte 6 gegen die untere Formhälfte 7 in entsprechende Formkavitäten 9 der unteren Formhälfte 7 hineingefahren werden, um darin das Folienmaterial umzuformen und so in dem Folienmaterial Vertiefungen 10 zu formen (vgl. Figur 1 c). Es ist anstelle der Vielzahl von Stempel und Kavitäten auch nur jeweils eine oder eine kleine Anzahl möglich. In Figur 1a ist auf der rechten Seite ein Koordinatensystem dargestellt, welches auch für die Figuren 1b und 1c gilt. Demnach soll die Höhenrichtung im Folgenden der Z-Achse entsprechen. Die Translationsrichtung der Folienbahn 1, in welcher diese mittels der Zuführeinrichtung 2 in die Verformungseinrichtung 3 verbracht wird, wird als X-Achse bezeichnet. Die Richtung senkrecht zur Z-Achse und zur X-Achse, d. h. die Richtung in die Papierebene hinein bzw. aus der Papierebene heraus, wird als Y-Achse bezeichnet. Jede der oberen bzw. unteren Formhälften 6, 7 ist im Wesentlichen eine rechteckige Formhälfte mit in regelmäßiger Anordnung angeordneten Formstempeln 8 bzw. Formkavitäten 9. Wenn die Folienbahn 1 in die Verformungseinrichtung 3 transferiert worden ist, wird sie dort abgelegt. Im vorliegenden Fall wird die obere Formhälfte 6 gegen die untere Formhälfte 7 gedrückt, wobei in der Folienbahn 1 Vertiefungen 10 ausgebildet werden. In dem mit Bezug auf die Figuren 1a bis 1c beschriebenen Beispiel wird die Folienbahn 1, ohne zuvor in einzelne Folienabschnitte unterteilt zu werden, in der Verformungseinrichtung 3 abgelegt. Wenn jedoch ein Vorschneiden vor dem Verformen vorgesehen ist, kann dieses nach Art und/oder in einer solchen Einrichtung geschehen, wie es in der deutschen Patentanmeldung Nr. 10 2015 220 738.2 beschrieben ist, deren Offenbarungsgehalt in dieser Hinsicht durch diesen Verweis in die vorliegende Anmeldung integriert wird. Nachdem im vorliegenden Beispiel die Folienbahn 1 zwischen den Formstempeln 8 und den Formkavitäten 9 verformt worden ist, so dass die einzelnen Vertiefungen 10 gebildet worden sind, wird diese mittels der Schneideinrichtung 11 fertig geschnitten und in die Form gebracht, dass eine Vielzahl von fertigen Teilschalen, welche im vorliegenden Halbschalen bilden, erhalten wird.

Das in Bezug auf die Figuren 1a bis 1c beschriebene Verfahren ist beispielhaft. Zur Herstellung der erfindungsgemäßen Teilschalen kann auch jedes andere Verfahren verwendet werden solange die in den Ansprüchen beschriebenen Merkmale erhalten werden können. Die mit einem Umform- bzw. Tiefziehverfahren erhaltenen Teilschalen 13, 13' weisen die Vertiefung 10 auf und einen die Vertiefung begrenzenden Flansch 14 (vgl. Figur 2). Anstatt, dass, wie in dem Beispiel, eine Vielzahl von Teilschalen 13, 13' gleichzeitig gebildet werden, kann auch jede Teilschale 13, 13' einzeln hergestellt werden. Die in den Figuren 1a bis 1c dargestellte Heizeinrichtung kann auch gänzlich weggelassen werden. Dies ist insbesondere dann vorteilhaft, wenn sich das verwendete Material für die Teilschalen auch ohne eine Erwärmung umformen lässt. Die mittels der Vorrichtung aus Figuren 1a bis 1c produzierten Teilschalen 13, 13' werden, wie beispielsweise in Figur 2, auf der rechten Seite dargestellt, zur Bildung der Verpackung derart zusammengesetzt, dass die entsprechenden Flansche 14, 14' und die jeweilige Teilschale 13, 13' flächig aneinander liegen und so einen von der Verpackung abragenden Randabschnitt 15 bilden. Vorliegend ist dieser z.B. umlaufend als saturnartiger abragender Randabschnitt 15 ausgebildet. Das Lebensmittel liegt, wie in Figur 2 auf der rechten Seite gezeigt, im Wesentlichen vollflächig an der Innenwandung der Teilschalen an.

In Figur 2 auf der linken Seite ist eine Querschnittsansicht der fertig geschnittenen Teilschale 13 und in Figur 2 in der Mitte eine Aufsicht auf diese Teilschale 13 dargestellt, wobei die Vertiefung 10 im Wesentlichen mittig angeordnet ist und von dem Flansch 14 umgeben wird. Über diesen Flansch 14 werden z.B., wie in Figur 2 auf der rechten Seite dargestellt, eine erste Teilschale 13 mit einer zweiten Teilschale 13' verbunden, nachdem eine Schokohohlfigur oder ein sonstiges Lebensmittelprodukt in die durch die Vertiefungen 10 der jeweiligen Teilschale 13, 13' gebildete Kavität 16 eingelegt worden ist. In dem Beispiel in Figur 2 handelt es sich bei dem verpackten Produkt um ein Schokoladenei. Deshalb sind die Teilschalen 13, 13' als Halbschalen ausgebildet und bilden eine eiförmige Struktur. Die Teilschalen bzw. die Verpackung der vorliegenden Erfindung kann jede beliebige Ausgestaltung aufweisen und ist nicht auf eine solche eiförmige Ausgestaltung beschränkt.

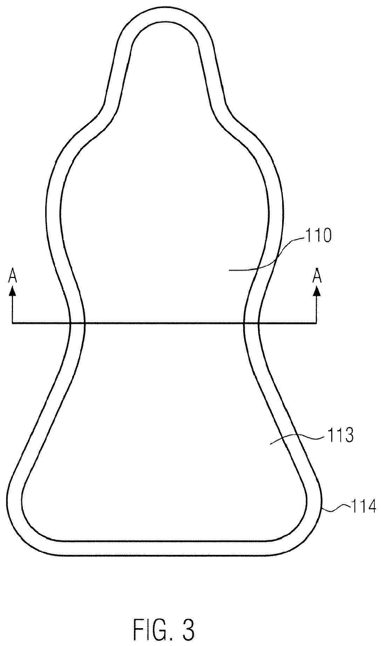

In Figur 3 ist beispielsweise eine Aufsicht auf eine Teilschale 113, einer nikolausförmigen Verpackung, die für einen Schokonikolaus verwendet werden kann, dargestellt. Ähnlich wie die Teilschale 13, 13' für die eiförmige Verpackung aus Figur 2, weist die Teilschale 113 einen Flansch 114 auf, welcher eine in der Teilschale 113 ausgebildete Vertiefung 110 umgibt. Im vorliegenden Fall umgibt der Flansch 114 die Vertiefung 110 vollumfänglich.

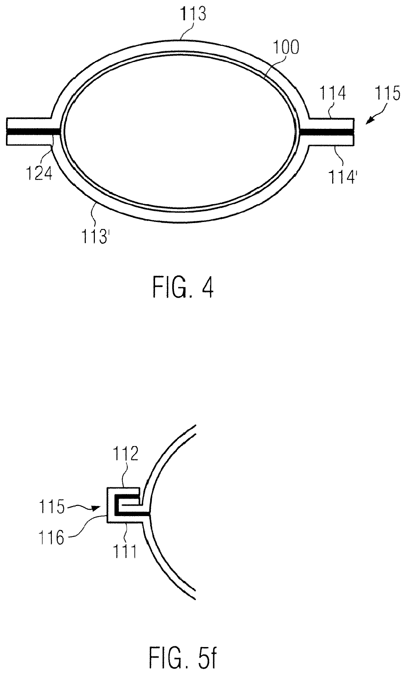

In Figur 4 ist eine Querschnittsansicht der Verpackung auf Figur 3 entlang der Linie A-A aus Figur 3 dargestellt. Die Verpackung ist aus zwei Teilschalen 113', 113 aufgebaut. Die entsprechenden Flansche 114, 114' der jeweiligen Teilschale 113, 113' liegen gegeneinander an und bilden einen abstehenden Randabschnitt 115. Im Beispiel sind die Flansche 114, 114' mittels einer Versiegelung 124 dichtend miteinander verbunden, so dass das in der Verpackung aufgenommene Lebensmittel 100 dichtend in der Verpackung gehalten wird. Die Siegelschicht kann durch einen Kleber, der an den entsprechenden Stellen an den Flanschen aufgebracht ist, erhalten werden. Alternativ oder zusätzlich kann das verwendete Material für die Teilschalen 113, 113' auch an dessen Innenseite mit einem thermoformbaren Kunststoff beschichtet sein, der nach Erhitzen in den aneinander liegenden Flanschbereichen schmilzt und dort die Versiegelung 124 bildet.

In Figur 5f ist ausgehend von dem Beispiel aus Figur 4 eine Situation dargestellt, in der der von einander gegenüberliegenden und aneinander anliegenden Flanschen 114, 114' gebildete abstehende Randabschnitt 115 gebördelt ist, so dass ein proximaler Randabschnitt 111 und ein distaler Randabschnitt 112 gebildet wird, welche über eine Faltlinie 116 voneinander getrennt sind.

Als beispielhaftes Verfahren, wie eine solche Bördelung hergestellt wird, sei das Verfahren mit den Schritten aus Figuren 5a bis 5e nachfolgend näher erläutert.

In Figur 5a ist die obere Teilschale 203 und die untere Teilschale 203', welche zwischen sich eine Schokohohlfigur 201 aufnehmen, in ein in einer unteren Formhälfte 208 vorgesehenes Formnest 209 eingelegt. Die untere Formhälfte 208 weist einen Auflagebereich 210 auf, auf welchem ein proximaler Randabschnitt 211 der beiden Teilschalen 203, 203' planar aufliegt. Ein distaler Randabschnitt 212 ragt über dem Auflagebereich 210 der unteren Formhälfte 208 hinaus und steht seitlich von der unteren Formhälfte 208 ab. Im Verlauf des Verfahrens von Figur 5a nach Figur b wird eine obere Formhälfte 213, die ein oberes Formnest 214 enthält, über die von den beiden Teilschalen 203, 203' gebildete Verpackung gelegt, so dass die obere Teilschale 203 im oberen Formnest 214 zur Anlage kommt (vgl. Figur 5b). Die obere Formhälfte 213 weist eine Festlegefläche 215 auf, welche im Zusammenwirken mit dem Auflagebereich 210 der unteren Formhälfte 208 den proximalen Randabschnitt 211 festlegt. Der proximale Randabschnitt 211 wird so zwischen der Festlegefläche 215 und dem Auflagebereich 210 festgelegt. Hierzu wird die obere Formhälfte 213 gegen die untere Formhälfte 208 gedrückt, wobei die untere Formhälfte 208 derart federt oder anders mechanisch bzw. kraftbeaufschlagt gelagert ist, dass diese bei dem von der oberen Formhälfte 214 auf diese ausgeübten Druck, wie in Figur 5b dargestellt, leicht zurückgedrückt wird. Hierbei wird die komplette Verpackung aus den beiden Teilschalen 203, 203' mitsamt dem abstehenden Randabschnitt 205, in der in den Figuren dargestellten vertikalen Richtung nach unten gedrückt und gegen ein feststehendes Umknickelement 216 verschoben, so dass der distale Randabschnitt 212 gegen den proximalen Randabschnitt 211 im Wesentlichen im 90° Winkel geknickt wird. Letztendlich kann jedoch auch die obere bzw. die untere Formhälfte 208, 214 feststehend ausgebildet sein und das Umknickelement 216 als in Höhenrichtung verschiebbares Element ausgebildet sein. Letztendlich soll eine Verschiebbarkeit des Umknickelements 216 in Relation zu dem festgelegten Flansch gewährleistet werden. Um ein einfaches Knicken zu gewährleisten, weist das Umknickelement 216 an einem einer späteren zwischen dem proximalen Randabschnitt 211 und dem distalen Randabschnitt 212 gebildeten Faltlinie zugewandten Bereich eine gerundete Oberfläche 217 auf. Es kann zumindest während des Umknickens eine der beiden Flächen, die Festlegefläche 215 oder der Auflagebereich 210 oder beide dieser Flächen und/oder zusätzliche Bereiche der Oberfläche des Umknickelements 216, insbesondere Bereiche der gerundeten Oberfläche 217, erwärmt werden, so dass die beiden Lagen im Randbereich aufgrund der Wärmewirkung leichter verformt und umgeknickt werden können. Auch während des Festlegens in diesem Stadium kann z.B. durch Erwärmen eine Versiegelung hergestellt werden. Nachdem der distale Randabschnitt 212 in dem in Figur 5b gezeigten Verfahrensschritt in einem Winkel von etwa 90° umgeknickt ist, findet in den in Figuren 5c bis 5e dargestellten Schritten die endgültige Falzung bzw. Bördelung statt. Nachdem die obere Formhälfte 213 bei dem in Figur 5b dargestellten Umknicken wieder in vertikaler Richtung hochgefahren worden ist, wird die untere Formhälfte 208 wieder in die in Figur 5a dargestellte Ausgangsposition verschoben. Vorzugsweise geschieht dies aufgrund der federnden Lagerung der unteren Formhälfte 208, wenn die obere Formhälfte 213 zurückgezogen wird. Das Umknickelement 216 ist in diesem Ausgangszustand bzw. Bördelzustand der Umformhälfte 208, also unterhalb des Auflagebereichs 210 der unteren Formhälfte 208 positioniert. Eine mehrteilige zweite obere Formhälfte 218, welche eine andere Formhälfte als die obere Formhälfte 213 sein kann, weist in radialer Richtung der Verpackung bzw. des abstehenden Randabschnittes 205 gesehen, an deren äußeren Bereich einen in Längsrichtung federgelagerten Formstempel 219 auf (vgl. Figur 5c). Dieser weist einen schrägen Umlegeoberflächenbereich 220 auf, der in Bezug auf den distalen Randabschnitt 212 derart positioniert ist, dass der Umlegeoberflächenbereich 220 soweit zumindest der bewegliche Formstempel 219 in horizontaler Richtung nach unten gegen den aufgestellten distalen Flanschabschnitt 212 gedrückt wird, den geknickten distalen Randabschnitt 212 zumindest leicht schräg nach innen aus dem 90° Winkel heraus umknickt (vgl. Figuren 5c, 5d). Hierdurch gelangt ein kantenseitiges Ende des distalen Randabschnitts 212 in einen Bereich einer Festlegeoberfläche 221 der mehrteiligen zweiten oberen Formhälfte 218. So ist der Formstempel 219 in dem Ausführungsbeispiel als Teil der zweiten oberen Formhälfte 218 ausgebildet und mittels einer Feder aufgehängt. Andere Ausgestaltungen, die die beschriebene Kinematik erlauben, sind jedoch auch möglich. Die in der Querschnittsrichtung in Figur 5c gesehene radiale Ausrichtung der Festlegeoberfläche 221 ist vorzugsweise kleiner als die radiale Ausdehnung des Auflagebereichs 210 der unteren Formhälfte 208. Die radialen Längsausdehnungen der Festlegeoberfläche 221 zusammen mit dem schrägen Umlegeoberflächenbereich 220 ist leicht größer als die Ausdehnung des Auflagebereichs 210 der unteren Formhälfte 208, oder entspricht im Wesentlichen der radialen Ausdehnung des Auflagebereichs 208. In dem in Figur 5d dargestellten Schritt wird der distale Randabschnitt 212 mittels des beweglichen Formstempels 219 nach innen umgebogen bzw. gebördelt, um nachfolgend mit der Festlegeoberfläche 221 des Formkörpers 222 der oberen mehrteiligen zweiten Formhälfte 218 letztendlich angelegt bzw. gefaltet zu werden. Auch während des letzten Schrittes kann z.B. durch Erwärmen der Festlegeoberfläche 221 des Formkörpers 222 eine Versiegelung stattfinden. Während die obere mehrteilige Formhälfte 218 heruntergefahren wird, wird auf den an der Feder frei hängenden Formstempel 219 eine Gegenkraft gegen die Gewichtskraft des Formstempels 219 ausgeübt, so dass sich dieser in Relation zu dem Formkörper 222 der oberen mehrteiligen Formhälfte 218 relativ verschiebt. Eine solche relative Verschiebung kann auch anstelle der federnden Aufhängung durch eine Motorstellung oder eine andere Kinematik erreicht werden. Um eine entsprechende Gegenkraft zu erzielen, ist die untere Formhälfte 208 z.B. während der Prozessschritte c, d und e festgelegt.

Mit dem in Bezug auf Figur 5 dargestellten Schritt wird beispielsweise der abstehende Randabschnitt 205, der durch zwei einander gegenüberliegende Flansche gebildet wird, auf sich zurückgelegt bzw. gebördelt. Dieses Verfahren ist rein beispielhaft beschrieben.

Eine solche Bördelung kann zur Verbindung der erfindungsgemäßen Teilschalen vorgesehen sein. Dies ist jedoch nicht notwendigerweise der Fall.

Bei der Verpackung gemäß der vorliegenden Erfindung ist es vorteilhaft, dass das Lebensmittelprodukt konturabbildend, insbesondere vollflächig an den Innenwänden des von den Teilschalen gebildeten Hohlraums anliegt, der von den beiden Vertiefungen der beiden Teilschalen gebildet wird.

Die Teilschalen sind z.B. aus einem Materialbogen oder aus einem Folienstreifen von einer Rolle hergestellt und weisen eine gewisse Stabilität nach deren Umformung auf, so dass die Vertiefung mit dem diese umgebenden Flansch entsteht.

Nachfolgend werden beispielhaft einzelne Aspekte der erfindungsgemäßen Lebensmittelverpackung in Bezug auf die Figuren 6a bis 7b erläutert.

In Figuren 6a und 6b ist eine Teilschale eines bioabbaubaren Kunststoffmaterials dargestellt, welche zwischen der oberen Formhälfte 6 und der unteren Formhälfte 7 aus Figuren 1a bis 1c hergestellt ist. Hierzu wurde ein Kunststoffmaterialbogen in der Größe eines DIN A 4 Papiers zwischen die Formhälften 6, 7 gelegt und umgeformt. Der Formstempel 8 drückt hierbei das Kunststoffmaterial in die Formkavität 9, um die eulenförmige Ausgestaltung, wie sie in Figuren 6a und 6b zu sehen ist, zu erhalten.

Nach der Umformung kann das erhaltene umgeformte Kunststoffprodukt entlang des Umfangs der eulenförmigen Kontur derart geschnitten werden, dass beispielsweise der den Figuren 6a, 6b dargestellte Flansch 114 erhalten wird (siehe auch Fig. 3). Der Flansch begrenzt die Teilschalen vollumfänglich und grenzt die Vertiefung 110 der Teilschale 113 ein. Die durch Tiefziehen geformte Teilschale 113 aus dem bioabbaubaren Kunststmaterial weisen Nuten 301, Ausbuchtungen 302 und Einkerbungen 303 auf, die einer Oberflächenbeschaffenheit der später darin eingehausten Schokoeule entsprechen. Es hat sich verwunderlicherweise herausgestellt, dass aufgrund der in Umformrichtung herrschenden Bedingungen die gezeigten Oberflächenmuster (Nuten 301, Ausbuchtungen 302 und Einkerbungen 303) auf der Teilschale 113 ausgebildet werden können.

Wie in Figuren 6a und 6b zu sehen, weist die Teilschale 113 eine gewisse Formstabilität auf. Die Teilschale kann dadurch in der Umformeinrichtung erhalten werden, dass das Kunststoffmaterial vorher und/oder während des Umformens erwärmt bzw. erhitzt wird.

Nach Beschneiden des Kunststoffmaterialbogens, so dass an der Teilschale 13 der Flansch 114 bereitgestellt wird, können zwei einander entsprechende Teilschalen aus demselben Material miteinander verbunden werden. Neben zwei Teilschalen aus demselben Material kann z.B. die Eulenvorderseite aus bioabbaubarem Kunststoff und die Eulenrückseite beispielsweise aus Papier und/oder Metallmaterial ausgebildet sein.

In Querschnittsrichtung quer zur Längsachse weist die Vertiefung 110 der Teilschalen ein Tiefen- zu Längenverhältnis von ungefähr 1:0,25 auf.

Insbesondere sind die die Vertiefung 110 zu dem Flansch 114 begrenzenden Seitenwände im Wesentlichen senkrecht zu dem planaren Flansch 114 ausgebildet.

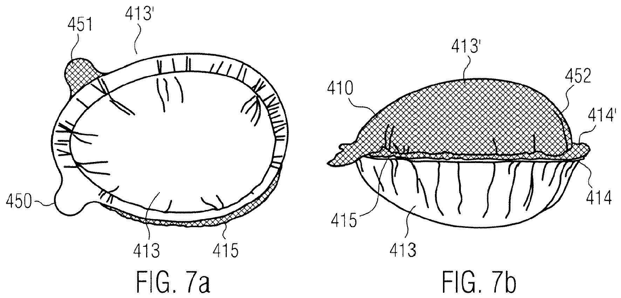

Figuren 7a und 7b zeigen verschiedene Ansichten eines zwischen zwei Teilschalen 413, 413' aufgenommenen Schokoladeneis. An den jeweiligen Flansch 414, 414' ist ein Laschenabschnitt 450, 451 vorgesehen, mittels welchem die Verpackung geöffnet werden kann.

Für die Teilschale 413 aus Papier, die in Figur 7a, b dargestellt ist, wurde Papiermaterial mit einer Stärke von 190 µm und einem Flächengewicht von 150 Gramm pro m² verwendet. Die Teilschale 413' ist aus dem erfindungsgemäßen bioabbaubaren Kunststoffmaterial.

Wie in diesen Figuren zu sehen ist, sind an dem Kunststoffflansch 414' sowie an der zu dem Flansch benachbarten Wand der Vertiefung 410 Stauch- und Dehnfalten 452 vorgesehen, die durch das Tiefziehen zwischen den Formhälften 6 und 7 entstanden sind.

In Figur 7b ist eine Seitenansicht der Lebensmittelverpackung zu sehen, deren in Figur 7a dargestellte vordere Teilschale aus einem Papiermaterial ist und deren in Figur 7b nicht sichtbare rückseitige Teilschale aus dem erfindungsgemäßen bioabbaubaren Kunststoffmaterialabschnitt hergestellt ist.

Die aneinander anliegenden Flansche 414, 414' sind mittels einer Siegelung miteinander verbunden, so dass ein abstehender Randabschnitt 415 nach Art eines saturnartigen Ringes gebildet wird. Vorliegend muss kein Kleber in den Flanschbereich aufgebracht werden, sondern es wird beim heißsiegeln beispielsweise die Kunnstoffteilteilschale im Flanschbereich angeschmolzen. Nach Wärmebehandlung während des Zusammendrückens der beiden Flansche 414, 414', wird entsprechend eine Siegelung erhalten.

Die zuvor beschriebenen Ausführungsbeispiele sollen die Erfindung nicht beschränken. Die Ausführungsbeispiele dienen lediglich der Veranschaulichung der in der allgemeinen Beschreibung beschriebenen Aspekte.

### Bezugszeichenliste

- 1: Folienbahn
- 2: Zuführeinrichtung
- 3: Verformungseinrichtung
- 4: Heizeinrichtung
- 5: Steuereinrichtung
- 6: obere Formhälfte
- 7: untere Formhälfte
- 8: Formstempel
- 9: Formkavität
- 10: Vertiefung
- 11: Schneideinrichtung
- 12: Heizplatte
- 13, 13': Teilschale
- 14, 14': Flansch
- 15: abstehender Randabschnitt
- 16: Kavität

- 100: Lebensmittel
- 110: Vertiefung
- 111: proximaler Randabschnitt
- 112: distaler Randabschnitt
- 115: abstehender Randabschnitt
- 113, 113': Teilschale
- 114, 114': Flansch
- 116: Faltlinie
- 124: Versiegelung

- 201: Schokohohlfigur
- 203, 203': obere und untere Teilschale
- 205: abstehender Randabschnitt
- 208: untere Formhälfte
- 209: unteres Formnest
- 210: Auflagebereich
- 211: proximaler Randabschnitt
- 212: distaler Randabschnitt
- 213: obere Formhälfte
- 214: oberes Formnest
- 215: Festlegefläche
- 216: Umknickelement
- 217: gerundete Oberfläche
- 218: zweite obere Formhälfte
- 219: Formstempel
- 220: Umlegeoberflächenbereich
- 221: Festlegeoberfläche
- 222: Formkörper

- 301: Nut
- 302: Ausbuchtung
- 303: Einkerbung

- 410: Vertiefung
- 415: abstehender Randabschnitt
- 413, 413': Teilschale
- 414, 414': Flansch
- 450, 451: Laschenabschnitt
- 452: Stauch bzw. Dehnfalten

## Patentansprüche

1. Lebensmittelverpackung mit zumindest zwei Teilschalen (13, 13', 113, 113', 413, 413'), welche über einander gegenüberliegende und zumindest abschnittsweise aneinander anliegende Flansche (14, 14', 114, 114', 414, 414') miteinander verbunden sind und ein Lebensmittelprodukt (100) einhausen, wobei die Teilschalen (13, 13', 113, 113', 413, 413') im Wesentlichen konturabbildend an dem Lebensmittelprodukt (100) anliegen,
**dadurch gekennzeichnet, dass**
zumindest eine der zumindest zwei Teilschalen (13, 13', 113, 113', 413, 413') aus einem bioabbaubaren Kunststoffmaterialabschnitt gebildet ist.

2. Lebensmittelverpackung nach Anspruch 1, **dadurch gekennzeichnet, dass** das bioabbaubare Kunststoffmaterial ein thermoformbares Material ist.

3. Lebensmittelverpackung nach Anspruch 2, **dadurch gekennzeichnet, dass** das das bioabbaubare Kunststoffmaterial ein oder mehrere Materialien ausgewählt aus der Gruppe folgender Materialien enthält:
Polyhydroxyalkanoat, Polylactid, thermoplastische Stärke, Zellglas, Polyester.

4. Lebensmittelverpackung nach einem der vorherigen Ansprüche, **dadurch gekennzeichnet, dass** im Wesentlichen die gesamte Teilschale (13, 13', 113, 113', 413, 413') aus dem bioabbaubaren Kunststoffmaterial gebildet ist.

5. Lebensmittelverpackung nach einem der vorherigen Ansprüche, **dadurch gekennzeichnet, dass** beide der zumindest zwei Teilschalen (13, 13', 113, 113', 413, 413') aus je einem bioabbaubaren Kunststoffmaterialabschnitt geformt sind.

6. Lebensmittelverpackung nach einem der vorherigen Ansprüche, **dadurch gekennzeichnet, dass** die Lebensmittelverpackung aus lediglich zwei Teilschalen (13, 13', 113, 113', 413, 413') gebildet ist, welche jeweils für sich eine dreidimensionale gebogene Ausgestaltung aufweisen, sodass jede Teilschale (13, 13', 113, 113', 413, 413') für sich einen Teil des Hohlraums in dem das Lebensmittel (100) aufgenommen ist, bildet.

7. Lebensmittelverpackung nach einem der vorherigen Ansprüche, **dadurch gekennzeichnet, dass** auf deren Außenoberfläche, der Lebensmitteloberfläche entsprechende Nuten (301), Ausbuchtungen (302) und/oder Einkerbungen (303) ausgebildet sind.

8. Lebensmittelverpackung nach einem der vorherigen Ansprüche, **dadurch gekennzeichnet, dass** die Teilschalen (13, 13', 113, 113', 413, 413') Stauch- und/oder Dehnfalten (452) aufweisen.

9. Lebensmittelverpackung nach einem der vorherigen Ansprüche, **dadurch gekennzeichnet, dass** das die Lebensmittelverpackung ein Volumen von zwischen 17,5 cm³ und 27000 cm³ aufweist und das Lebensmittelprodukt (100) vollumfänglich umgibt.

10. Lebensmittelverpackung nach einem der vorherigen Ansprüche, **dadurch gekennzeichnet, dass** der Kunststoffmaterialabschnitt eine flächenbezogene Masse von zwischen 10 g/m² und 500 g/m² aufweist.

11. Lebensmittelverpackung nach einem der vorherigen Ansprüche, **dadurch gekennzeichnet, dass** der Kunststoffmaterialabschnitt eine Dicke von zwischen 10 µm und 1 mm aufweist.

12. Lebensmittelverpackung nach einem der vorherigen Ansprüche, **dadurch gekennzeichnet, dass** der Kunststoffmaterialabschnitt auf dessen äußeren Oberfläche und/oder auf dessen inneren Oberfläche, welche an dem Lebensmittelprodukt (100) anliegt, eine Beschichtung aufweist.

13. Lebensmittelverpackung nach einem der vorherigen Ansprüche, **dadurch gekennzeichnet, dass** die Teilschale (13, 13', 113, 113', 413, 413') auch ohne Anlage an dem Lebensmittelprodukt (100) formstabil ist.

14. Lebensmittelverpackung nach einem der vorherigen Ansprüche, **dadurch gekennzeichnet, dass** die Teilschale (13, 13', 113, 113', 413, 413') unter Wärmebehandlung umgeformt ist.

15. Lebensmittelverpackung nach einem der vorherigen Ansprüche, **dadurch gekennzeichnet, dass** die Teilschale (13, 13', 113, 113', 413, 413') mit einer Umformdauer unter Wärmebehandlung im Bereich von 0,1 µs bis zu 5 s hergestellt ist.

16. Lebensmittelverpackung nach einem der vorherigen Ansprüche, **dadurch gekennzeichnet, dass** die Teilschale (13, 13', 113, 113', 413, 413') nach deren Umformung einen Springback von unter 10% aufweist.

17. Lebensmittelverpackung nach einem der vorherigen Ansprüche, **dadurch gekennzeichnet, dass** die aneinander anliegenden Flansche (14, 14', 114, 114', 414, 414') gebördelt und/oder gesiegelt und/oder angelegt sind.
